# EUROPEAN PATENT SPECIFICATION

(11) **EP 1 387 591 B1**
(45) Date of publication and mention of the grant of the patent: **13.06.2007**
(21) Application number: 03017379.3
(22) Date of filing: 31.07.2003
(51) Int. Cl.: H04Q 7/22

(54) **Apparatus and method for providing MBMS service in a mobile communication system**
Vorrichtung und Verfahren zur Bereitstellung von MBMS-Diensten in einem Mobilkommunikationssystem
Appareil et procédé pour fournir des services MBMS dans un système de communication mobile

(30) Priority: 31.07.2002 KR 2002045445
(43) Date of publication of application: 04.02.2004
(73) Proprietor: SAMSUNG ELECTRONICS CO. LTD., Kyungki-do, Seoul (KR)
(72) Inventor: Kim, Soeng-Hun, Suwon-city Kyungki-do (KR); Lee, Kook-Heui, Suwon-city Kyungki-do (KR); Park, Joon-Goo, Suwon-city Kyungki-do (KR); Choi, Sung-Ho, Suwon-city Kyungki-do (KR)
(74) Representative: Grünecker, Kinkeldey, Stockmair & Schwanhäusser Anwaltssozietät

(56) References cited:
- "Universal Mobile Telecommunication System (UMTS);Multimedia Broadcast/Multicast Service (MBMS); Stage 1 (3GPP TS 22.146 version 5.2.0 Release 5)" ETSI TS 122 146 V5.2.0, XX, XX, 1 March 2002 (2002-03-01), pages 1-15, XP002208067
- "3rd Generation Partnership Project; Technical Specification Group Services and System Aspects; Multimedia Broadcast/Multicast Service; Architecture and Functional Description (Release 6)" 3GPP TR 23.846 1.1.1, 22 July 2002 (2002-07-22), pages 1-101, XP002260759

## Description

The present invention relates generally to an MBMS (Multimedia Broadcast/Multicast Service) service in a mobile communication system, and in particular, to a system and method for establishing a transport bearer for providing an MBMS service between a radio network controller (RNC) and a Node B.

In general, a multimedia broadcast/multicast service (hereinafter referred to as "MSMS") refers to a service for transmitting the same multimedia data to a plurality of recipients via a radio network. In this case, the recipients share one radio channel, thereby saving radio transmission resources.

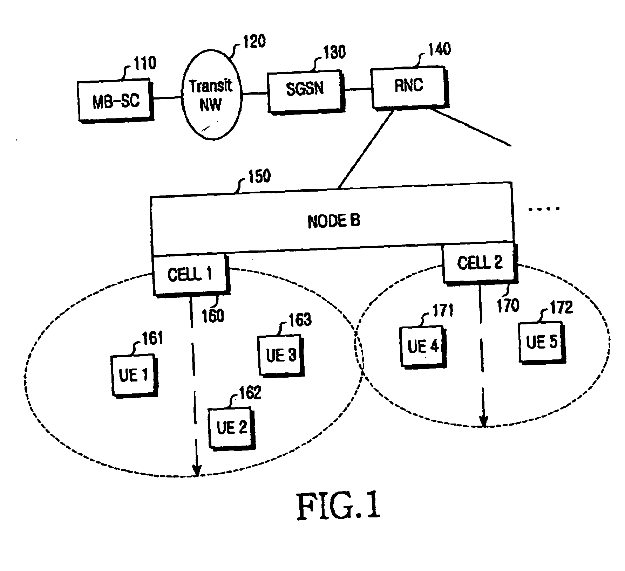

FIG. 1 illustrates a structure of a conventional mobile communication system for providing an MBMS service. Referring to FIG. 1, the mobile communication system for providing an MBMS service includes a plurality of user equipments (hereinafter referred to as "UEs") 161, 162, 163, 171 and 172, a Node B 150, a radio network controller (hereinafter referred to as "RNC") 140, a serving GPRS (General Packet Radio Service) support node (hereinafter referred to as "SGSN") 130, a transit network 120, and a multicast/broadcast-service center (MB-SC) 110.

The UEs 161, 162, 163, 171 and 172 are subscribers capable of receiving an MBMS service. The Node B 150 manages a plurality of cells including a cell_1 160 and a cell_2 170, and transmits MBMS-related data to the UEs. The cell_1 160 delivers the MBMS-related data provided from the Node B 150 to the UEs 161, 162 and 163, and the cell_2 170 delivers the MBMS-related data provided from the Node B 150 to the UEs 171 and 172. The Node B 150 is connected to the RNC 140 via a lub interface (not shown). Here, the "lub interface" refers to an interface that connects the Node B 150 to the RNC 140. The RNC 140 controls a plurality of Node Bs including the Node B 150. The RNC 140 selectively transmits MBMS data to a particular Node B, and controls a radio channel established to provide the MBMS service. The SGSN 130 controls MBMS-related data transmitted to respective subscribers. As a typical example, the SGSN 130 manages service accounting-related data for each subscriber and selectively transmits MBMS data to a particular RNC. The transit network 120 provides a communication path between the MB-SC 110 and the SGSN 130. The transit network 120 can be comprised of a gateway GPRS support node (GGSN) and an external network. The MB-SC 110, which serves as an MBMS data source for providing an MBMS service, performs scheduling on MBMS data. Though not illustrated in FIG. 1, a home location register (HLR) is connected to the SGSN 130 to authenticate a subscriber that is being provided with an MBMS service.

As illustrated in FIG. 1, an MBMS data stream is transmitted to the UEs 161, 162, 163, 171, and 172 via the transit network 120, the SGSN 130, the RNC 140, the Node B 150, and the cells 160 and 170. A plurality of SGSNs 130 can exist for one MBMS service, and a plurality of RNCs 140 can exist for each SGSN 130. In this case, the SGSN 130 must perform selective data transmission to the RNC 140, and the RNC 140 should also perform selective data transmission to a plurality of cells. To this end, the SGSN 130 and the RNC 140 must store a list of nodes to which the stream should be transmitted. That is, the SGSN should have a list of RNCs and the RNC should have a list of cells. Herein, a set of control information necessary for providing a particular MBMS service will be called an "MBMS service context."

As described above, in the conventional method of providing an MBMS service, the RNC 140 receiving MBMS service data provided from the MB-SC 110 has no way to deliver the received MBMS service data to a plurality of Node Bs. In other words, a Node B having a plurality of cells cannot manage MBMS data provided from the RNC.

Therefore, the present invention aims at providing an improved method in which the RNC 140 delivers MBMS service data provided from the MB-SC 110 to a corresponding Node B, and the Node B provides different MBMS service data to corresponding cells.

ETSI TS 122 146 V5.2.0, "Universal Mobile Telecommunication System (UTMS); Multimedia Broadcast/Multicast service (MBMS); Stage 1 (*GPP TS 22.146 version 5.2.0 Release 5)", (01-03-2002), pages 1-15 describes MBMS service provision phases, including service announcement, MBMS broadcast mode bearer set up, MBMS notification, data transfer and MBMS broadcast mode bearer release.

3GPP TR 23.846 1.1.1, "3rd Generation Partnership Project; Technical Specification Group Services and System Aspects; Multimedia Broadcast/Multicast Service; Architecture and Functional Description (Release 6)" (22-07-2002), pages 1-101 describes a network and protocol architecture for MBMS Multicast Service Activation and MBMS RAB set up.

It is the object of the present invention to provide improved methods and corresponding mobile communications systems for Multimedia Broadcast/Multicast Services that are provided by a Node B in the mobile communication system to user equipment.

This object is solved by the subject matter of the independent claims.

Preferred embodiments are defined by the subject matter of the dependent claims.

It is, therefore, an aspect of the present invention to provide an apparatus and method in which a Node B receives first information that can be determined according to services and second information that can be determined according to cells, from an RNC, and the Node B manages and maintains the first information and the second information in a mobile communication system.

It is another aspect of the present invention to provide an apparatus and method for setting up a transport bearer for providing an MBMS service between an RNC and a Node B in a mobile communication system.

It is further another aspect of the present invention to provide a method for efficiently transmitting MBMS data to a Node B by an RNC in a mobile communication system.

To achieve the above and other aspects, there is provided a method for providing a multimedia broadcast/multicast service (MBMS) between a radio network controller (RNC) and a Node B in a mobile communication system including a plurality of user equipments (UEs), the Node B having a plurality of cells for providing the MBMS service to the UEs, and the RNC for controlling the Node B and neighbor Node Bs, which are adjacent to the Node B. In the method, the RNC transmits a request message including first information that can be determined according to services and second information that can be determined according to cells, to the Node B, in order to support the MBMS service. The Node B generates a service context for providing an MBMS service according to the first information and the second information of the request message, and allocates identification information of the service context. The Node B sets up a transport bearer to the RNC according to the first information in the service context, and then, if the MBMS service data is received from the RNC over the transport bearer, transmits the received MBMS data to the respective cells, enabling the UEs to receive the MBMS data.

To achieve the above and other aspects, there is also provided a method for transmitting multimedia broadcast/multicast service (MBMS) data in a mobile communication system. In the method, upon perceiving start of a particular MBMS service, a radio network controller (RNC) detects cells where user equipments (UEs) scheduled to receive the MBMS data are located. The RNC determines first information for setting up a transport bearer to a Node B to which the cells belong, and transmits the determined first information to the Node B. Upon receiving the first information by the RNC, the Node B sets up a transport bearer to the RNC according to the first information, and then, if the MBMS data is received from the RNC over the transport bearer, transmitting the received MBMS data to the respective cells so that the UEs receive the MBMS data.

To achieve the above and other aspects, there is also provided a Node B apparatus for receiving multimedia broadcast/multicast service (MBMS) data in a mobile communication system. In the Node B apparatus, a transmission controller generates an MBMS service context by receiving a message including first information for setting up a transport bearer for receiving the MBMS data from a radio network controller (RNC) and information on a cell where user equipments (UEs) scheduled to receive the MBMS data are located, and forms cell transmitters for transmitting the MBMS data to a corresponding cell according to the cell information. A distribution unit distributes the MBMS data, thereby enabling transmission of the MBMS data to a corresponding cell through the cell transmitters.

The above and other objects, features, and advantages of the present invention will become more apparent from the following detailed description when taken in conjunction with the accompanying drawings in which:
FIG. 1 illustrates a structure of a conventional mobile communication system for providing an MBMS service FIG. 2 is a flow diagram illustrating an operation of providing an MBMS service in a mobile communication system according to an embodiment of the present invention;
FIG. 3 is a flow diagram illustrating a procedure for transmitting MBMS service data between an RNC and a Node B according to an embodiment of the present invention;
FIG. 4 is a flowchart illustrating a procedure for transmitting MBMS service data in an RNC according to an embodiment of the present invention
FIG. 5 is a flowchart illustrating a procedure for transmitting MBMS service data in a Node B according to an embodiment of the present invention;
FIG. 6 illustrates a format of NBCC according to an embodiment of the present invention;
FIG. 7 illustrates a format of an MBMS FP data frame according to an embodiment of the present invention;
FIG. 8 illustrates a transmitter structure of a Node B according to an embodiment of the present invention; and
FIG. 9 is a diagram illustrating a procedure for transmitting MBMS service data between an RNC and a Node B according to an embodiment of the present invention.

### DETAILED DESCRIPTION OF THE PREFERRED EMBODIMENT

Several preferred embodiments of the present invention will now be described in detail with reference to the annexed drawings. In the following description, a detailed description of known functions and configurations incorporated herein has been omitted for concisencss.

The present invention provides a method for establishing a transport bearer for an MBMS service to efficiently transmit MBMS data between an RNC and a Node B via a lub interface.

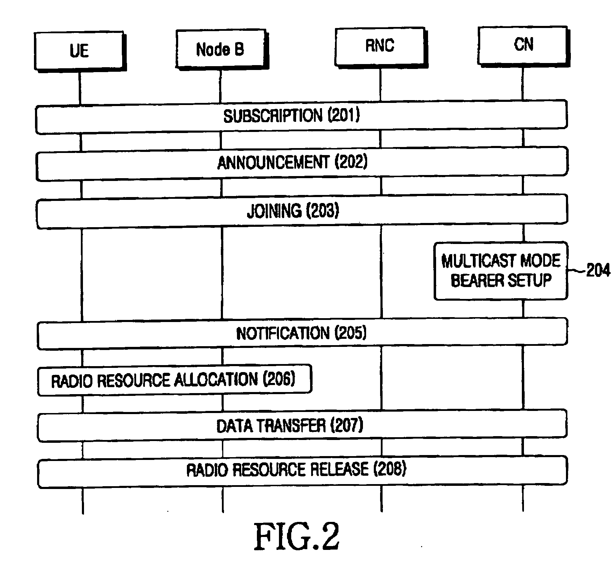

FIG. 2 is a flow diagram illustrating an operation of providing an MBMS service in a mobile communication system according to an embodiment of the present invention. Referring to FIG. 2, a subscription step 201 is a process in which UEs desiring to receive a particular MBMS service send a registration request to an MBMS service provider. In the service request process, MBMS service-related accounting information or MBMS service reception-related fundamental information is exchanged between the MBMS service provider and the UEs.

In announcement step 202, service announcement for a particular MBMS service is performed. Through the announcement step 202, UEs desiring to receive a particular MBMS service can acquire fundamental information on the corresponding MBMS service, for example, an MBMS service ID (Identifier), a service start time, and a service hold time. An MB-SC can broadcast a Service Announcement message using a cell broadcast service in order to transmit the MBMS service-related fundamental information to the UEs.

If the UEs that acquired fundamental information on a specific MBMS service through the announcement step 202 request a particular MBMS service, joining step 203 is performed. In the joining step 203, the UE transmits a requested MBMS service ID to an upper core network (CN). Devices interposed between the CN and the UE detect UEs requesting the particular MBMS service and where the particular UEs are located. For example, an RNC 140 contains a list of UEs requesting an MBMS service and a list of cells where the UEs requesting the MBMS service are located. That is, the UEs that acquired MBMS service information in step 202 transmit an identifier for their desired particular MBMS service to the CN in step 203, so that the RNC 140 can have a list of UEs requesting the particular MBMS service and information on a cell where the UEs are located.

In multicast mode bearer setup step 204, the CN establishes a transport bearer for providing the MBMS service. For example, a GTP-U/UDP/IP/L2/L1 bearer for the MBMS service can be previously established between an SGSN and a GGSN on the CN.

In notification step 205, since the MBMS service will be immediately started, UEs requesting the MBMS service are paged. In this step, before actual MBMS service data is transmitted, the UEs are informed that an MBMS service will be started. In the notification step 205, the existing paging method or a paging method optimized for an MBMS service can be used. That is, a new paging method for an MBMS service, being different from the existing paging method, can be used.

In radio resource allocation step 206, in order to provide the MBMS service, radio resources are actually allocated and the allocated information is notified to related devices. The radio resource allocation step 206 can be divided into a radio bearer setup process and a radio link setup process. First, in the radio bearer setup process, the RNC provides UEs located in a particular cell with radio bearer information over which the MBMS service is to be transmitted in a corresponding cell. Second, in the radio link setup process, the RNC provides cells where UEs scheduled to receive the MBMS service are located, with information on a transport bearer and a radio bearer to be formed on a lub interface.

After the radio resource allocation step 206, actual MBMS service data is transmitted to the UEs in data transfer step 207. In radio resource release step 208, if the MBMS service is ended, the radio resources established in step 206 are released.

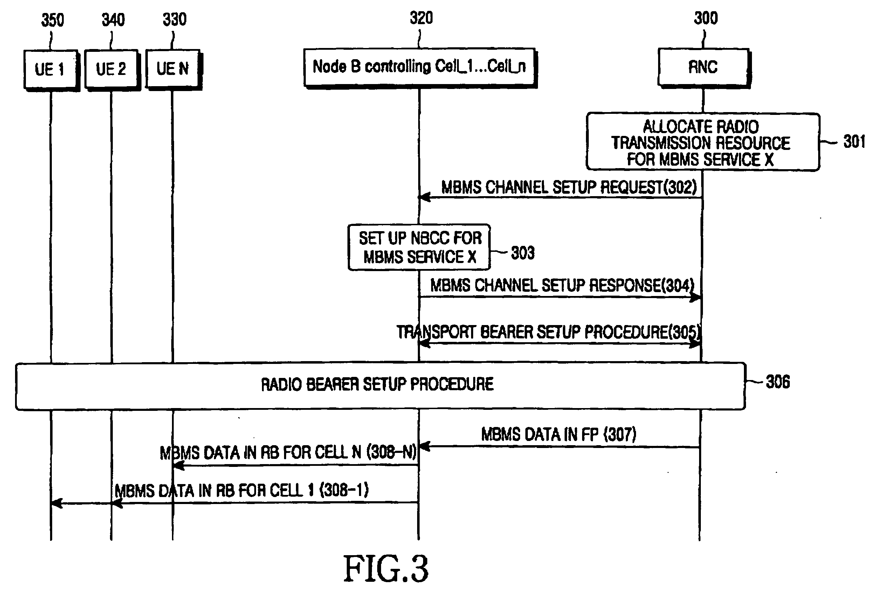

FIG. 3 is a flow diagram illustrating a procedure for delivering MBMS service data between an RNC and a Node B according to an embodiment of the present invention. Referring to FIGs. 2 and 3, an RNC 300 can control a plurality of Node Bs, and a Node B 320 can control a plurality of cells. For convenience, it will be assumed in FIG. 3 that the Node B 320 controls a cell_l to a cell_n, and a plurality of UEs requesting a particular MBMS service X are located in the cell_l to the cell_n.

In step 301, the RNC 300 allocates radio transmission resources to a particular Node B among a plurality of Node Bs for a particular MBMS service X. In the following case, the RNC 300 allocates radio transmission resources for the MBMS service X. The RNC 300 allocates radio transmission resources for the MBMS service X upon receiving a radio resource allocation request for the MBMS service X from a CN, i.e., an upper system. In addition, the RNC 300 allocates radio transmission resources for the MBMS service X when one or more UEs requested the MBMS service X through the notification process for the MBMS service X in step 205. That is, the RNC 300 allocates radio transmission resources when a current UE among the UEs notified in step 205 requests data for a particular MBMS service X.

In step 302, the RNC 300 that allocated radio transmission resources for the MBMS service X transmits to the Node B 320 an MBMS Transport Channel Setup Request message including information related to the radio transmission resources for the MBMS service X. That is, the RNC 300 requests the Node B 320 to establish a radio channel for providing an MBMS service. Therfore, the Node B 320 will set up a transmitter according to further information related to the radio transmission resources.

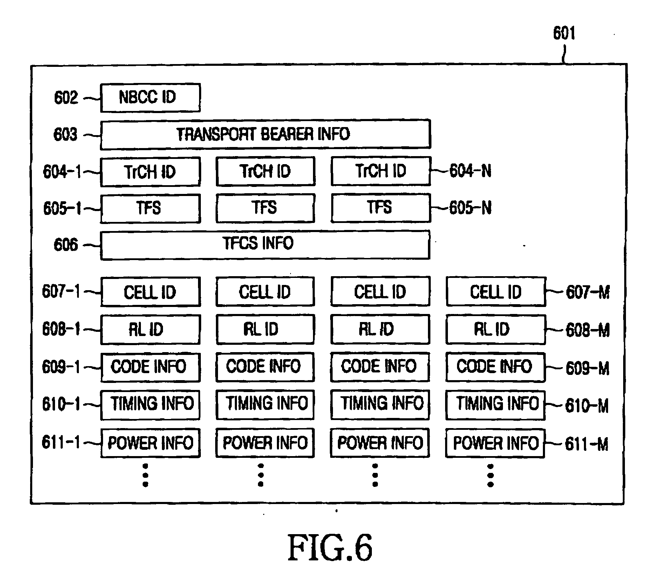

In step 303, upon receiving the MBMS Transport Channel Setup Request message, the Node B 320 enables a transmitter suitable to corresponding cells based on radio resource information from the received MBMS Transport Channel Setup Request message, and stores the radio resource information for the corresponding cell in a Node B communication context (NBCC). That is, upon receiving the MBMS Transport Channel Setup Request message from the RNC 300, the Node B 320 forms an NBCC for the MBMS service X. The NBCC will be described in detail later with reference to FIG. 6.

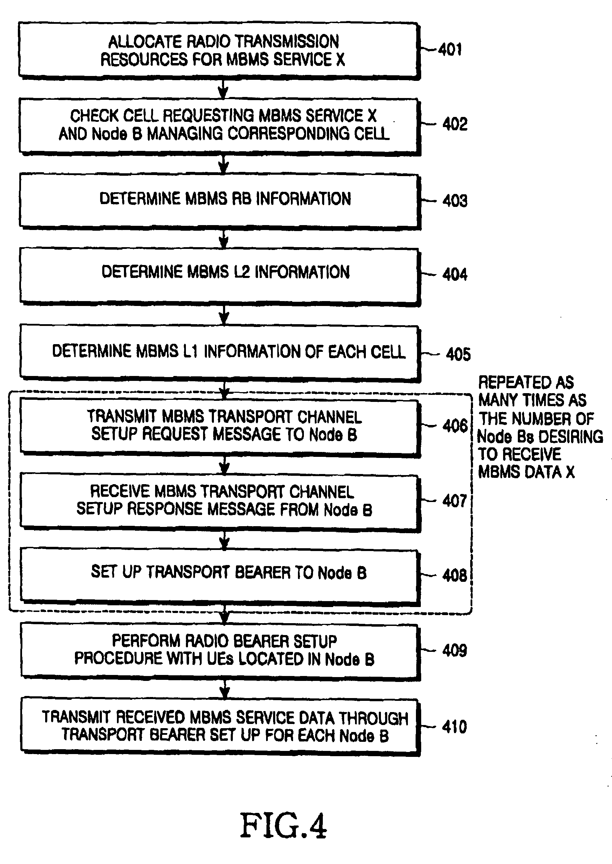

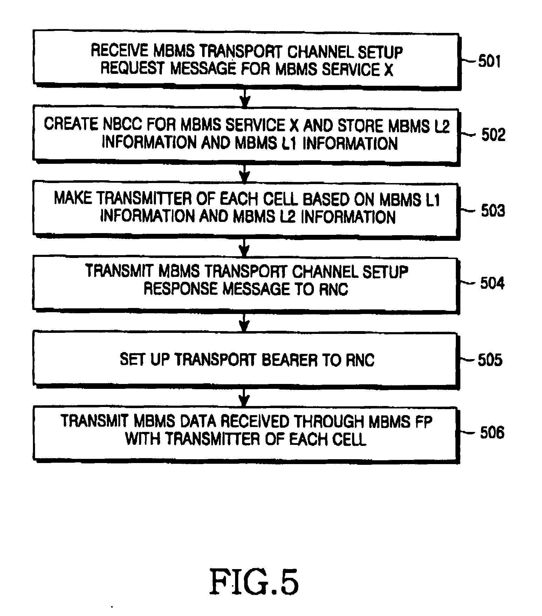

In step 304, after forming the NBCC, the Node B 320 transmits an MBMS Transport Channel Setup Response message to the RNC 300 in response to the MBMS Transport Channel Setup Request message. That is, through the MBMS Transport Channel Setup Response message, the Node B 320 informs the RNC 300 that a transmitter of the corresponding cells is successfully established. In addition, the Node B 320 transmits information necessary for establishing a transport bearer of a lub interface (an interface for connecting an RNC to a Node B) to the RNC 300 along with the MBMS Transport Channel Setup Response message. The information necessary for establishing the transport bearer will be described hereinbelow with reference to FIGs. 4 and 5.

Therefore, in step 305, a transport bearer is set up between the RNC 300 and the Node B 320. The transport bearer setup procedure will be described in detail with reference to FIGS. 4 and 5.

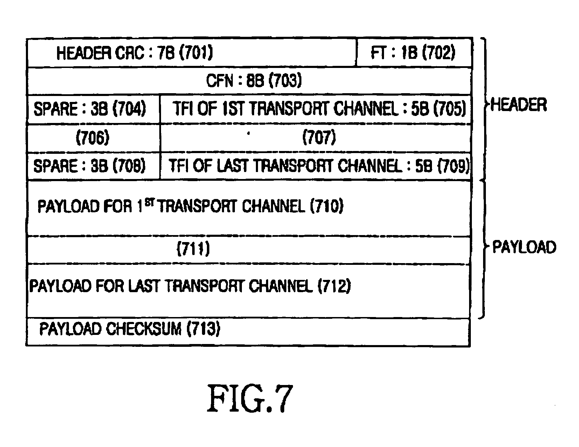

In step 306, UEs 330, 340, and 350, which are requesting desiring to receive the MBMS service X and are located in a plurality of cell regions existing in the Node B 320, perform a radio bearer setup process with the RNC 300. Since the step 306 is not directly related to the present invention, a detailed description thereof will be omitted. After step 306, cells where UEs UE_1 and UE_n requesting the MBMS service data X are located, among the cells cell_1 to cell_n controlled by the Node B 320, prepare to receive the MBMS service data X. Thereafter, in step 307, the RNC 300 receives MBMS service data X from a CN, generates a data frame in a frame protocol (FP) using the MBMS service data X, and transmits the generated data frame to the Node B 320. The FP will be described in more detail with reference to FIG. 7.

In step 308, the Node B 320 transmits MBMS service data for the cell_1 and cell_n over the established radio bearer.UEs located in each cell receive data for the MBMS service X. That is, the Node B transmits corresponding MBMS service data to a UE requesting the MBMS service data, over the established radio bearer.

Therefore, upon receiving data for the MBMS service X over the same transport bearer in step 307, the Node B 320 transmits in step 308 the MBMS service X to a cell where UEs requesting the MBMS service X are located, over the established radio bearer.

FIG. 4 is a flowchart illustrating a procedure for delivering MBMS service data in an RNC according to an embodiment of the present invention. An operation of the RNC 300 for performing the procedure illustrated in FIG. 3 will be described in more detail with reference to FIG. 4. That is, a detailed description will be made of information on a UE requesting an MBMS service and an operation of the RNC 300 including a process of establishing a transport bearer to be established based on the UE information, according to an embodiment of the present invention.

Referring to FIG. 4, the RNC 300 allocates radio transmission resources for a particular MBMS service X in a Node B in step 401. That is, the RNC 300 allocates radio transmission resources for transmitting MBMS service data to one or more UEs requesting the MBMS service data at a time when the MBMS service is to be actually started. After allocating radio transmission resources for the MBMS service X in step 401, the RNC 300 checks, in step 402, cells where UEs requesting the MBMS service X are located and Node Bs including the cells. The RNC 300 can store a list of the Node Bs and the cells through the notification step 205 as illustrated in FIG. 2. In addition, the RNC 300 can receive the list of the UEs from the CN and then check cells where the UEs are located and Node Bs including the cells based on the list of the UEs.

The RNC 300 transmits the MBMS data X to the Node B over the same transport bearer. In this case, UEs receiving the MBMS service data X are located in different cells. Therefore, the RNC 300 checks position information of cells including UEs receiving the MBMS service X and a Node B including the cells.

In step 403, the RNC 300 determines MBMS radio bearer information for the MBMS service X in order to establish a radio bearer with a Node B including the cells. The MBMS radio bearer information can be determined for each MBMS service. In addition, the MBMS radio bearer information can be comprised of packet data conversion protocol information and radio link control information.

In step 404, the RNC 300 determines Layer 2 (L2) information for providing the MBMS service X.

L2 information = [TFS for MBMS TrCH_1, ..., TFS for MBMS TrCH_n, TFCS]

The L2 information can be determined for each service, and when a plurality of transport channels are multiplexed for a particular MBMS service, transport format sets (TFS for MBMS TrCH_1,.., TFS for MBMS TrCH_n) are determined for each transport channel.

In step 405, the RNC 300 determines MBMS Layer 1 (L1) information for providing the MBMS service. The MBMS L1 information is determined for each cell, and can be formed of the following information.

MBMS L1 information = [C_ID, RL ID, channelization code information, timing information, maximum power information]

C_ID is an identifier of a cell to with the L1 information is to be applied, and RL ID is an identifier of a radio link embodied with the L1 information. In addition, the channelization code information is a spreading factor and a position on a spreading code tree, and can be determined by a data rate requested by the MBMS service.

The timing information is information for correcting a difference between a local time of each cell and a local time of the RNC 300. The timing information is later used for an operation of converting a connection frame number (CFN) of an FP header into a system frame number (SFN) of each cell. For example, if timing information of a particular cell 1 is T_1, SFN for transmitting a payload of the FP can be calculated by adding T_1 to CFN of the FP header.

The maximum power information is maximum transmission power that can be transmitted in a corresponding cell. The maximum power information can be differently applied for each cell according to a transmission resource state of the cell.

In step 406, the RNC 300 transmits an MBMS Transport Channel Setup Request message to Node Bs where the UEs are located, based on the list of the UEs stored in step 402. The MBMS Transport Channel Setup Request message can be formed as follows.

MBMS TRANSPORT CHANNEL SETUP REQUEST = [MBMS RB information * 1, MBMS L2 information * 1, MBMS L1 information *n]

As described above, because the MBMS radio bearer information and the MBMS L2 information are equal for every cell, they are inserted only once, and because the MBMS L1 information is different for each cell, it is inserted as many times as the number n of cells. In addition, information on a cell scheduled to receive a particular MBMS service can be repeatedly inserted into one message as many times as the number of cells of a Node B scheduled to receive the MBMS service before being transmitted. This is different from establishing one same transport bearer to the Node B. In addition, it is also possible to include MBMS radio bearer information, cell information, and MBMS L2 information for each cell, and repeat the included information as many times as the number of cells scheduled to receive a particular MBMS service before transmission.

In step 407, the Node B forms a transmitter of each cell according to MBMS radio bearer information, MBMS L2 information, and MBMS L1 information included in the MBMS Transport Channel Setup Request message. At this moment, the Node B can insert transport address information and binding ID of a transport bearer on a lub interface, to be used for transmission/reception of MBMS data, in the MBMS Transport Channel Setup Request message. In addition, the RNC 300 can insert an identifier of a Node B communication context (NBCC) including the transmitter formed through the MBMS Transport Channel Setup Request message and the information. The NBCC will be described in detail with reference to FIG. 6.

In step 408, the Node B and the RNC set up a transport bearer on the lub interface by using the transport address information and the binding information ID.

The above-described steps 406 to 408 are repeatedly performed as many times as the number of Node Bs desiring to receive the MBMS service X. That is, the steps are separately performed from Node Bs where UEs requesting the MBMS service X are located. Such steps 406 to 408 represent a process in which the RNC 300 sets up a transport bearer by transmitting the MBMS Transport Channel Setup Request message to the Node B and receiving the MBMS Transport Channel Setup Response message from the Node B. The transport bearer should be differently established according to the type of the MBMS service, and even for the same MBMS service, different transport bearers should be established for the respective Node Bs.

In step 409, the RNC 300 transmits MBMS radio bearer information, MBMS L2 information, and MBMS L1 information to UEs belonging to a Node B for which the steps 406 to 408 were completed, and then receives a response thereto. If step 409 and the preceding steps are completed for a particular cell and UEs belonging to the cell, it indicates that preparation for providing the MBMS service X to the cell and the UEs is completed.

In step 410, upon receiving the MBMS service data X from the CN, the RNC 300 transmits the MBMS service data X over a transport bearer formed for each Node B, by using an MBMS frame protocol (FP). The MBMS FP will be described in detail with reference to FIG. 7.

FIG. 5 is a flowchart illustrating a procedure for delivering MBMS service data in a Node B according to an embodiment of the present invention. Referring to FIG. 5, in step 501, the Node B 320 receives an MBMS Transport Channel Setup Request message for a particular MBMS service X requested in step 406. That is, as described above, the Node B 320 receives information on a transport bearer that has been requested to be established to provide the MBMS service X.

Referring to FIG. 5, upon receiving the MBMS Transport Channel Setup Request message for the MBMS service X, the Node B 320 constructs NBCC (Node B Communication Context) and then stores the related information in step 502. A format of the NBCC will be described with reference to FIG. 6.

In step 503, the Node B 320 establishes a transmitter of each cell by using MBMS L2 information and MBMS L1 information in the NBCC. That is, the Node B 320 sets up a transmitter of a corresponding cell that is to provide the MBMS service, based on information on the cell where UEs expected to receive the MBMS service data transmitted from the RNC are located.

In step 504, the Node B 320 transmits an MBMS Transport Channel Setup Response message to the RNC 300. The Node B 320 inserts transport bearer address information and a binding ID in the MBMS Transport Channel Setup Response message. Also, the Node B 320 inserts an NBCC ID in the MBMS Transport Channel Setup Response message.

In step 505, the Node B 320 sets up a transport bearer on a lub interface between the Node B 320 and the RNC 300. When the procedure proceeds to up to step 505, the Node B 320 has completed preparation for providing the MBMS service X. More specifically, the Node B 320 has prepared to receive data for the MBMS service from the RNC 300 through one transport bearer.

In step 506, upon receiving the MBMS service data using the FP, the Node B 320 properly processes the received MBMS service data based on header information of the FP. That is, upon receiving the MBMS service data from the RNC 300 over the transport bearer established in step 505, the Node B 320 transmits the MBMS service data X to each cell using a transmitter of the cell where the UEs scheduled to receive the MBMS service data are located. A more detailed description of step 506 will be made with reference to FIG. 7.

FIG. 6 illustrates a format of NBCC according to an embodiment of the present invention. Referring to FIG. 6, upon receiving an MBMS Transport Channel Setup Request message from the RNC 300, the Node B 320 forms NBCC corresponding to the MBMS Transport Channel Setup Request message. That is, when the MBMS Transport Channel Setup Request message is received, the Node B 320 creates new NBCC and then assigns an ID thereto. Because an NBCC ID 602 is a logical identifier, the Node B 320 assigns a stream of 20 bits unused at that time. In addition, L2 information included in the message is stored in an appropriate parameter. If n TrCH IDs and n transport format sets (TFSs) are included in the L2 information, the TrCH IDs are stored in parameters 604-1 to 604-n, and the TFSs are stored in parameters 605-1 to 605-n. The TFS is comprised of TF (Transport Format) and TFI (Transport Format ID) specifying a method of processing data belonging to a corresponding transport channel. In addition, TFCS (Transport Format Combination Set) information included in the message is stored in a TFCS information parameter 606.

Also, L1 information included in the message is stored in an appropriate parameter. The message includes L1 information containing Cell ID, RL ID, channelization code information, timing information, and maximum power information of each cell. This information is stored, respectively, in parameters 607-1 to 611-m as illustrated in FIG. 6.

When the NBCC is formed using information in the MBMS Transport Channel Setup Request message, the Node B 320 sets up a transmitter of each cell according to parameter values in the NBCC. That is, the Node B 320 sets up a spreader by matching a transmitter of a cell corresponding to the Cell ID to the channelization code information, sets maximum transmission power according to the maximum power information, and sets a transmission time according to the timing information. In addition, the Node B 320 sets a channel coding scheme and a rate matching scheme according to values of TFSs 605-1 to 605-n.

As described above, the Node B 320, after setting up a transmitter of each cell, determines a transport address and a binding ID to be used for a transport bearer on the lub interface, stores the determined transport address and binding ID in a transport bearer information parameter 603, and transmits the MBMS Transport Bearer Setup Response message to the RNC 300. The MBMS Transport Bearer Setup Response message includes the transport address, the binding ID, and the NBCC ID 602. The RNC 300 transmits the MBMS service data to the Node B 320 over a transport bearer on the lub interface, formed using the transport address and the binding ID.

For example, if the transport bearer on the lub interface is AAL2 (ATM (Asynchronous Transfer Mode) Adaptation Layer 2)/ATM, the transport address can make a pair using the same values of AAL2 channel ID and VCI/VPI (Virtual Channel Identifier/Virtual Path Identifier). The Node B 320 transmits payloads of an FP data frame arriving at the transport address to the transmitter formed through the NBCC. If the number of transmitters formed through the NBCC is m, i.e., transmitters are formed in m respective cells, the Node B 320 transmits MBMS service data received through the FP data frame with the m transmitter. As a result, the same MBMS service data is transmitted to the cells.

FIG. 7 illustrates a format of an MBMS FP data frame according to an embodiment of the present invention. Referring to FIG. 7, MBMS FP refers to a protocol for exchanging MBMS service data streams between the RNC 300 and the Node B 320, and determining to which reception side the MBMS FP corresponds is made by a transport address from a lower layer. For example, if a transport address from a lower layer for an MBMS service X is set to y, a reception side of an FP data frame transmitted to the address y is identical to a reception side of the MBMS service X. Therefore, the MBMS FP data frame does not include an identifier of the reception side, and the transport address from the lower layer serves as an identifier of the reception side.

Header CRC (Cyclic Redundancy Check) 701, in which a header CRC operation result is inserted, is comprised of 7 bits. A reception side can determine whether there is any error in a received FP header, by analyzing the header CRC 701. Frame type (FT) 702 is 1-bit information and serves to distinguish a data frame from a control frame. In the invention, because an MBMS FP control frame is not used, a detailed description thereof will be omitted for simplicity. CFN 703 is time information that should be converted into a local time of each cell by using timing information of each cell transmitted with the MBMS Transport Channel Setup Request message. For example, it is assumed that 2 cells are formed in a particular Node B, and local times of a cell_1 and a cell_2 are SFN_1 and SNF_2, respectively. Further, it is assumed that timing information transmitted by the RNC 300 is T_1 and T_2. In this case, if CFN of an MBMS FP data frame is A, the local time SFN_1 when the cell_1 should transmit a payload transmitted through the data frame over a radio channel can become the sum of the A and the T_1. In addition, SFN_2 can become the sum of the A and the T_2. Spare 704 is a field in which 3 null bits are inserted for byte alignment of the header. TFI (Transport Format Indicator) 705 of a first transport channel is a field in which TFI of a first transport channel transmitted through a data frame is inserted. The TFI 705 commonly represents a size of data, i.e., a size of a payload 710. In addition, the TFI 705 is formed for each transport channel, and a set of the TFI 705 is stored in TFS 605.

A payload 710 of a first transport channel corresponds to a first transport channel formed between the Node B 320 and the RNC 300 to provide a particular MBMS service, and a size thereof is notified through the TFI 705.

After a payload 712 of the last transport channel is inserted, a payload checksum 713 is inserted in the payload part. The payload checksum 713 is a field in which a checksum operation result for the payloads 710 to 712 is inserted. A reception side can determine whether there is any error occurred in a payload, by analyzing the payload checksum field 713.

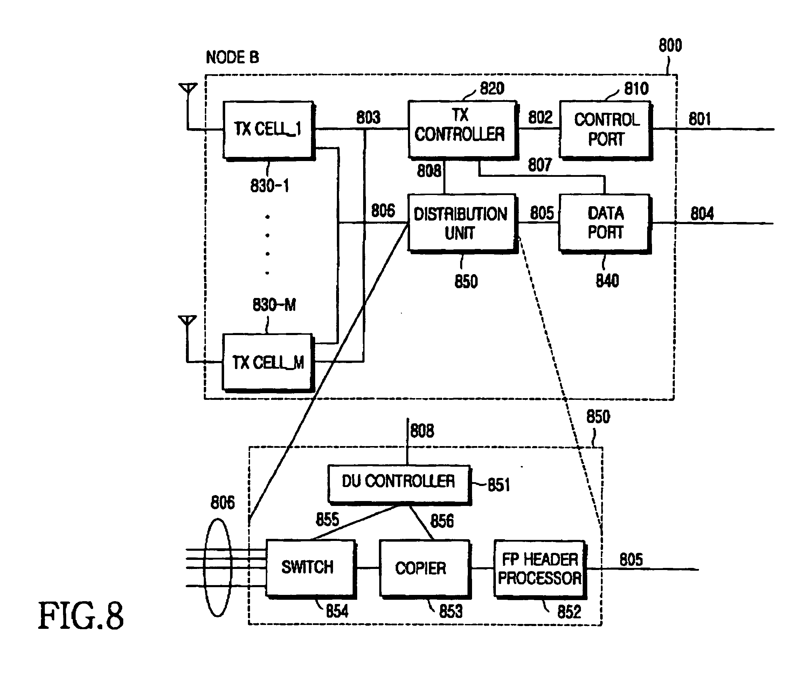

FIG. 8 illustrates a transmitter structure of a Node B according to an embodiment of the present invention, wherein only the part related to the invention is shown. Referring to FIG. 8, a Node B 800 receives a control message transmitted from an RNC via a control port 810. That is, the control port 810 exchanges control messages between the RNC and the Node B 800 according to a transport address from a lower layer. For example, in a lub interface of R99 UMTS (Universal Mobile Telecommunications System), a control message is transmitted using AAL5/ATM. In this case, the data is exchanged between the RNC and the Node B 800 through a predetermined AAL5/ATM address. The control port 810 receives an MBMS Transport Channel Setup Request message, and delivers the received message to a transmission controller 820. The transmission controller 820 forms the NBCC illustrated in FIG. 6 using control information included in the MBMS Transport Channel Setup Request message, and forms a transmitter of each cell according to information stored in the code information parameters 609-1 to 609-n, the timing information parameters 610-1 to 610-n, and the power information parameters 611-1 to 611-n (see 803). In addition, the transmission controller 820 applies control signals to a distribution unit 850 and a data port 840 to connect corresponding MBMS service data to transmitters of an appropriate cell. Further, the control port 810 determines transport address information, and then transmits the determined transport address information to the RNC through an MBMS Transport Channel Setup Response message. Moreover, the Node B 800 performs the transport bearer setup procedure 305 as illustrated in FIG. 3, and then forms the data port 840 according to the result. The data port 840, like the control port 810, can correspond to a transport address from the lower layer. For example, the data port 840 for a particular MBMS service X is an AAL2/ATM address determined through a transport bearer setup procedure for the MBMS service. That is, it can be considered that an ATM cell received with the specific AAL2/ATM address on the lub interface is received through the data port 840.

When the Node B 800 exchanges the MBMS Transport Channel Setup Request/Response messages for the MBMS service data X and sets up the data port 840 through the transport bearer setup procedure, the Node B 800 has finished preparation for receiving the MBMS service data X and can transmit the received data to a corresponding cell. Thereafter, when the MBMS service data X arrives via the data port 840, the MBMS service data X is distributed to transmitters of an appropriate cell by the distribution unit 850, and then transmitted over the air through the transmitters of each cell.

The distribution unit 850 will now be described in more detail herein below. The distribution unit 850 is comprised of a DU (Distribution Unit) controller 851, a switch 854, a copier 853, and an FP header processor 852. The transmission controller 820 delivers cell IDs to the DU controller 851.

The DU controller 851 delivers the cell IDs provided from the transmission controller 820 to the switch 854, and delivers information on the number n of cells to the copier 853. The copier 853 copies data provided later from the FP header processor 852 as many times as the number n of cells, and then delivers the copied data to the switch 854. The switch 854 sets up connections with n cell transmitters corresponding to the cell IDs provided from the DU controller 851, and then delivers n data blocks provided from the copier 853 to the respective cell transmitters. The FP header processor 852 processes a header part of the data frame illustrated in FIG. 7, provided from the data port 840. More specifically, the FP header processor 852 determines whether there is any error in the header, through a CRC operation. If there is no error, the FP header processor 852 delivers other parts except the header CRC 701 and the frame type (FT) 702, to the copier 853. The copier 853, as described above, copies data provided from the FP header processor 852 n times, and delivers the copied data to the switch 854. The switch 854 delivers the data to the connected cell transmitters one by one, and each cell transmitter processes the delivered data and transmits the processed data over a radio channel.

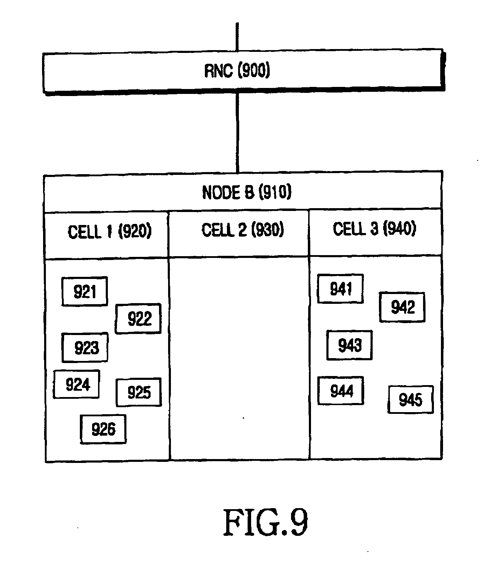

FIG. 9 is a diagram illustrating a procedure for exchanging MBMS service data between an RNC and a Node B according to an embodiment of the present invention. Referring to FIG. 9, when an MBMS RAB (Radio Access Bearer) Assignment Request message for a particular MBMS service X transmitted by an SGSN is received, an RNC 900 checks a list of UEs requesting the MBMS service X and positions of the UEs. It is assumed herein that the UEs requesting the MBMS service X are located in a cell_1 920 and a cell_3 940, and identifies 921, 922, 923, 924, 925, 926, 941, 942, 943, 944, and 945 of the UEs are located in the cell_1 920 and the cell_3 940. Although it seems that the identifiers are related to cell identifiers, the identifiers are unique identifiers assigned to respective UEs, widely known as IMSI (International Mobile Subscriber Identity). The identifiers of the UEs are delivered to the RNC 900 by the SGSN through an MBMS RAB Assignment Request message. The RNC 900 sets up connection between the UEs and an RRC (Radio Resource Control) layer through the notification step 205 as illustrated in FIG. 2. Therefore, the RNC 900 checks positions of the UEs.

After checking the positions of the UEs, the RNC 900 determines RB (Radio Bearer) information, L2 information, and L1 information to be applied to the cell_1 920 and the cell_3 940 where the UEs requesting the MBMS service X are located. Generally, the RB information is comprised of PDCP information and RLC information, and the above-stated information is commonly applied to every cell. The L2 information can include TFS information. For example, the MBMS service X is comprised of one transport channel. A transport block size of the transport channel is 100 bits, and uses 1/2 convolutional coding as a channel coding scheme. In addition, if available sizes of transport block sets are 100,200, 300, and 600 bits, the TFS information is formed as follows.

TFS for MBMS TrCH: TFI 1 = 100 bits, TFI 2 = 200 bits, TFI 3 = 300 bits, TFI 4 = 600 bits, semi-static part: TB size = 100 bits, channel coding = 1/3 CC

The TFS information is later delivered to UEs 921 - 926 and 941 - 945, and a Node B 910.

In addition, the RNC 900 determines L1 information to be applied to the MBMS service X for each cell. For example, the L1 information can be as follows.

L1 for Cell 1 : RL ID = 1, SF = 16, channel code = 15, max power = -3 dB, L1 for Cell 3 : RL ID = 2, SF 16, channel code = 10, max power = -3dB

The RNC 900 delivers the above information to the Node B 910 using an MBMS Channel Setup Request message. Upon receiving the information, the Node B 910 forms the NBCC illustrated in FIG. 6, and establishes a transmitter of each cell using the NBCC. That is, a 15^{th} channelization code with SF=16 and 1/3 channel coding (CC) are applied for a spreader and a channel coder in a transmitter of the cell_1 920, respectively. Also, even for the cell_3 940, the Node B 910 forms a transmitter of each cell in the same way as the ccll_l 920, and transmits an MBMS Channel Setup Response message to the RNC 900. The channel message can be formed as follows.

MBMS CHANNEL SETUP RESPONSE = [NBCC ID: 4, successful RL: RL ID 1, RL ID 3, failed RL: null, transport bearer: AAL2 ch id = 3, ATM VPI/VCI = 2]

Thereafter, the RNC 900 uses 3 for the AAL2 ch id and 2 for the ATM VPI/VCI in transmitting MBMS service data X to the Node B 910. If AAL2 chi id and ATM VPI/VCI of received data are 3 and 2, respectively, then the RNC 900 identifies that the data is MBMS service data, and delivers the data to the corresponding DU controller 851 to transmit the data to the cell_1 920 and the cell_3 940. The UEs 921 to 926 of the cell_1 920 receive RB information, L2 information, and L1 information of the cell_1 920 through the radio bearer setup process 306, and can receive MBMS service data transmitted by the cell_1 920. The UEs of the cell_3 940 can receive the MBMS service data in the same method as the UEs of the cell_1 920.

When information on a cell receiving data for a particular MBMS service, e.g., MBMS service X, is changed, a transmitter structure of a corresponding cell must be set up or released according to the change in cell information. For example, if the UB 941 receiving an MBMS service in the cell_3 940 is handed over to the cell_2 930, because the cell_2 930 is not currently providing the MBMS service, a cell transmitter for the MBMS service must be newly established. Upon detecting handover of the UE 941, the RNC 900 transmits information on a cell to which the UE 941 belongs, to the Node B 910. The Node B 910 then determines radio bearer information for providing the MBMS service for the cell_2 930 according to the information received from the RNC 900, and sets up a radio bearer to the cell_2 930 according to the determined radio bearer information. Thereafter, the Node B 910 transmits MBMS service data received over the transport bearer established to the RNC 900, to the cell_2 930 over the radio bearer set up to the cell_2 930. Here, the Node B 910 establishes a cell transmitter according to the determined radio bearer information for the cell_2 930.

In addition, when all UEs receiving the MBMS service in the cell_3 940, i.e., UEs 941 to 945, are all handed over to the cell_1 920 or the cell_2 930, the radio bearer set up to provide the MBMS service in the cell_3 940 must be released, and the cell transmitter made up for the radio bearer should also be released. By doing so, it is possible to prevent unnecessary MBMS service transmission, i.e., prevent a case where an MBMS service is provided even though there is no UE actually desiring to receive the MBMS service.

As described above, the present invention provides a new method for delivering MBMS service data on a lub interface between an RNC and a Node B. In addition, the invention transmits MBMS service data over one transport bearer by setting up the one transport bearer on the lub interface, contributing to an increase in utilization efficiency of the lub interface resources.

While the present invention has been shown and described with reference to a certain preferred embodiment thereof, it will be understood by those skilled in the art that various changes in form and details may be made therein without departing from the invention as defined by the appended claims.

## Claims

1. A method for transmitting and receiving multimedia broadcast/multicast service, MBMS, data in a mobile communication system comprising a Node B and a RNC comprising the steps of:
(a) receiving at a Node B (501) first information for setting up a transport bearer for receiving the MBMS data from a radio network controller, RNC, (300; 900) and a second information on a cell where user equipments, UEs, (330, 340, 350) scheduled to receive the MBMS data are located;
(b) the Node B further setting up (505) the transport bearer according to the first information and setting up radio bearers according to the second cell information by setting up cell transmitters in each cell according to the second cell information; and
(c) upon receiving the MBMS data from the RNC over the transport bearer, the Node B further transmitting (506) the received MBMS data over the radio bearers, thereby enabling the UEs to receive the MBMS data.

2. The method of claim 1, wherein the step (c) comprises the steps of:
creating a Node B communication context, NBCC;
storing MBMS Layer 1 information and MBMS Layer 2 information; and
establishing a transmitter based on the MBMS Layer 1 information and the MBMS Layer 2 information.

3. The method according to claim 1, the method being for receiving a multimedia broadcast/multicast service, MBMS, service from the RNC by the Node B in the mobile communication system including a plurality of user equipments, UEs, (330, 340, 350) and the RNC for controlling the Node B including a plurality of cells (920; 930; 940) for providing the MBMS service to the UEs, the method comprising the steps of:
receiving (501) a transport bearer setup request message including said first information and information on a cell from the RNC in order to support the MBMS service;
generating (502) a service context for supporting the MBMS service according to the first information and the second information, and assigning an identifier for distinguishing the service context from a service context for supporting an MBMS service;
establishing a transmitter of each cell where UEs receiving the MBMS service are located, based on the first information and the second information; and
transmitting a transport bearer setup response message including a transport address identifier for setting up a transport bearer, a binding identifier, and a service context identifier.

4. The method according to claim 1, the method being for providing a multimedia broadcast/multicast service, MBMS, service between the radio network controller, RNC, (300; 900) and a Node B (320, 800, 910) in the mobile communication system including the plurality of user equipments, UEs (330, 340, 350), the Node B including a plurality of cells for providing the MBMS service to the UEs, and the RNC controlling the Node B and neighbor Node Bs, which are adjacent to the Node B, the method further comprising the steps of:
transmitting (302; 406) by the RNC a request message including first information for setting up a transport bearer for receiving MBMS services and second information on a cell where UEs scheduled to receive the MBMS services are located to the Node B, in order to support the MBMS services;
generating a service context for providing the MBMS services according to the first information and the second information of the request message, and allocating identification information of the service context;
wherein steps (b) and (c) comprising:
setting up (306; 505) a transport bearer according to the first information in the service context, and then, if MBMS service data is received from the RNC over the transport bearer, transmitting (506) the received MBMS data to respective cells so that the UEs receive the MBMS data.

5. The method of claim 4, wherein the first information is determined by information on the MBMS service.

6. The method of claim 4, wherein the second information is determined by information on a plurality of cells (920, 930, 940) belonging to the Node B (320; 800; 910).

7. The method of claim 4, wherein the first information is determined by information on the Node B (320; 800; 910).

8. The method according to claim 4, further comprising:
detecting cells where user equipments, UEs, scheduled to receive the MBMS data are located, upon detecting a start of a particular MBMS service;
determining first information for setting up a transport bearer to a Node B to which the cells belong, and transmitting the determined first information to the Node B; and
upon receiving the first information, setting up the transport bearer to the RNC according to the first information, and then, if the MBMS data is received from the RNC over the transport bearer, transmitting the received MBMS data to the cells, enabling the UEs to receive the MBMS data.

9. The method according to claim 4, further comprising:
detecting cells where user equipments, UEs, scheduled to receive the MBMS data are located, upon detecting a start of a particular MBMS service;
determining first information for setting up a transport bearer with a Node B to which the cells belong, and setting up the transport bearer with the Node B according to the first information; and
transmitting the MBMS data to the Node B over the transport bearer, thereby enabling the UEs to receive the MBMS data.

10. The method of claim 9, wherein the step of setting up the transport bearer comprises setting up one transport bearer between the RNC and the Node B and transmitting the MBMS data over the one transport bearer.

11. A mobile communication system for transmitting and receiving multimedia broadcast/multicast service, MBMS, data in the mobile communication system, comprising:
a radio network controller, RNC, (300; 900) for transmitting a message including first information for setting up a transport bearer for receiving the MBMS data and a second information on a cell where user equipments UEs scheduled to receive the MBMS data are located; and
a Node B (320; 800; 910) for setting up the transport bearer according to the first information, setting up radio bearers according to second cell information by setting up cell transmitters in each cell according to said second cell information, receiving the MBMS data transmitted from the RNC over the transport bearer, and transmitting the received MBMS data to the UEs over the radio bearers.

12. The mobile communication system of claim 11, whereby the Node B (800) comprises:
a transmission controller (820) for generating an MBMS service context by receiving a message including first information for setting up a transport bearer for receiving the MBMS data from a radio network controller, RNC, (300; 900) and information on cells where user equipments, UEs, scheduled to receive the MBMS data are located, and establishing cell transmitters for transmitting the MBMS data to the cells according to the cell information; and
a distribution unit (850) for distributing the MBMS data, enabling transmission of the MBMS data to the cells through the cell transmitters.

13. The mobile communication system of claim 15, wherein the distribution unit (850) comprises:
a copier (853) for copying the MBMS data according to a number of the cells under the control of a distribution unit controller;
a switch (854) for connecting the MBMS data transmitted from the copier to the cell transmitters under the control of the distribution unit controller, and
the distribution unit controller (851) for receiving cell information from the transmission controller and applying the received cell information to the copier and the switch as a control signal.

## Patentansprüche

1. Verfahren zum Senden und Empfangen von MBMS (Multimedia Broadcast/Multicast Service)-Daten in einem Mobilkommunikationssystem, das einen Knoten B (Node B) und einen RNC (Radio Network Controller) umfasst, wobei es die folgenden Schritte umfasst:
a) Empfangen (501) erster Informationen zum Einrichten eines Transportträgers (Transport Bearer) zum Empfangen der MBMS-Daten von einem RNC (300; 900) an einem Knoten B und zweiter Informationen über eine Zelle, in der sich Benutzer-Endgeräte (User Equipments) UE (330, 340, 350) befinden, die zum Empfangen der MBMS-Daten eingeteilt sind;
b) Einrichten (505) des Transportträgers gemäß den ersten Informationen und Einrichten von Funk-Trägern (Radio Bearers) gemäß den zweiten Zellen-Informationen durch den Knoten B durch Einrichten von Zellen-Sendern in jeder Zelle gemäß den zweiten Zellen-Informationen; und
c) nach Empfangen der MBMS-Daten von dem RNC über den Transportträger, Senden (506) der empfangenen MBMS-Daten über die Funk-Träger durch den Knoten B, um so die Benutzer-Endgeräte zum Empfangen der MBMS-Daten zu befähigen.

2. Verfahren nach Anspruch 1, wobei der Schritt c) die folgenden Schritte umfasst:
Erzeugen eines Kommunikations-Kontextes NBCC des Knotens B;
Speichern von MBMS-Layer-1-Informationen und MBMS-Layer-2-Informationen; und
Einrichten eines Senders auf Basis der MBMS-Layer-1-Informationen und der MBMS-Layer-2-Informationen.

3. Verfahren nach Anspruch 1, wobei das Verfahren zum Empfangen eines MBMS-Dienstes von dem RNC durch den Knoten B in dem Mobilkommunikationssystem dient, das eine Vielzahl von Benutzer-Endgeräten (User Equipments) UE (330, 340, 350) und den RNC zum Steuern des Knotens B enthält, der eine Vielzahl von Zellen (920; 930; 940) zum Bereitstellen des MBMS-Dienstes für die Benutzer-Endgeräte enthält, wobei das Verfahren die folgenden Schritte umfasst:
Empfangen (501) einer Nachricht von dem RNC, die Einrichtung eines Transportträgers anfordert und die ersten Informationen sowie Informationen über eine Zelle enthält, um den MBMS-Dienst zu unterstützen;
Erzeugen (502) eines Dienst-Kontextes, der den MBMS-Dienst unterstützt, gemäß den ersten Informationen und den zweiten Informationen, und Zuweisen einer Kennung zum Unterscheiden des Dienst-Kontextes von einem Dienst-Kontext zum Unterstützen eines MBMS-Dienstes;
Einrichten eines Senders jeder Zelle, in der sich Benutzer-Endgeräte befinden, die den MBMS-Dienst empfangen, auf Basis der ersten Informationen und der zweiten Informationen; und
Senden einer Transportträger-Einricht-Antwortnachricht, die eine Transportadressen-Kennung zum Einrichten eines Transportträgers, eine Binding-Kennung und eine Dienstkontext-Kennung enthält.

4. Verfahren nach Anspruch 1, wobei das Verfahren dazu dient, einen MBMS-Dienst zwischen dem RNC (300; 900) und einem Knoten B (320, 800, 910) in dem Mobilkommunikationssystem bereitzustellen, das die Vielzahl von Benutzer-Endgeräten (330, 340, 350) enthält, der Knoten B eine Vielzahl von Zellen zum Bereitstellen des MBMS-Dienstes für die Benutzer-Endgeräte enthält und der RNC den Knoten B sowie benachbarte Knoten B steuert, die an den Knoten B angrenzen, und das Verfahren des Weiteren die folgenden Schritte umfasst:
Senden (302; 406) einer Anforderungsnachricht durch den RNC, die erste Information zum Einrichten eines Transportträgers zum Empfangen von MBMS-Diensten und zweite Informationen über eine Zelle enthält, in der sich Benutzer-Endgeräte befinden, die zum Empfangen der MBMS-Dienste eingeteilt sind, zu dem Knoten B, um die MBMS-Dienste zu unterstützen;
Erzeugen eines Dienst-Kontext zum Bereitstellen der MBMS-Dienste gemäß den ersten Informationen und den zweiten Informationen der Anforderungsnachricht und Zuweisen von Identifizierungs-Informationen des Dienst-Kontextes;
wobei die Schritte b) und c) umfassen:
Einstellen (306; 505) eines Transportträgers gemäß den ersten Informationen in dem Dienst-Kontext und dann, wenn MBMS-Dienstdaten von dem RNC über den Transportträger empfangen werden, Senden (506) der empfangenen MBMS-Daten zu jeweiligen Zellen, so dass die Benutzer-Endgeräte die MBMS-Daten empfangen.

5. Verfahren nach Anspruch 4, wobei die ersten Informationen durch Informationen über den MBMS-Dienst bestimmt werden.

6. Verfahren nach Anspruch 4, wobei die zweiten Informationen durch Informationen über eine Vielzahl von Zellen (920, 930, 940) bestimmt werden, die zu dem Knoten B (320; 800; 910) gehören.

7. Verfahren nach Anspruch 4, wobei die ersten Informationen durch Informationen über den Knoten B (320; 800; 910) bestimmt werden.

8. Verfahren nach Anspruch 4, das des Weiteren umfasst:
Erfassen von Zellen, in denen sich Benutzer-Endgeräte befinden, die zum Empfangen der MBMS-Daten eingeteilt sind, nachdem ein Beginn eines bestimmten MBMS-Dienstes erfasst wurde;
Bestimmen erster Informationen zum Einrichten eines Transportträgers zu einem Knoten B, zu dem die Zellen gehören, und Senden der bestimmten ersten Informationen zu dem Knoten B; und
nach Empfang der ersten Informationen, Einrichten des Transportträgers zu dem RNC gemäß den ersten Informationen und dann, wenn die MBMS-Daten von dem RNC über den Transportträger empfangen werden, Senden der empfangenen MBMS-Daten zu den Zellen, wodurch die Benutzer-Endgeräte befähigt werden, die MBMS-Daten zu empfangen.

9. Verfahren nach Anspruch 4, das des Weiteren umfasst:
Erfassen von Zellen, in denen sich Benutzer-Endgeräte befinden, die zum Empfangen der MBMS-Daten eingeteilt sind, nachdem ein Beginn eines bestimmten MBMS-Dienstes erfasst wurde;
Bestimmen erster Informationen zum Einrichten eines Transportträgers mit einem Knoten B, zu dem die Zellen gehören, und Einrichten des Transportträgers mit dem Knoten B gemäß den ersten Informationen; und
Senden der MBMS-Daten zu dem Knoten B über den Transportträger, wodurch die Benutzer-Endgeräte befähigt werden, die MBMS-Daten zu empfangen.

10. Verfahren nach Anspruch 9, wobei der Schritt des Einrichtens des Transportträgers Einrichten eines Transportträgers zwischen dem RNC und dem Knoten B und Senden der MBMS-Daten über den einen Transportträger umfasst.

11. Mobilkommunikationssystem zum Senden und Empfangen von MBMS (Multimedia Broadcast/Multicast Service)-Daten in dem Mobilkommunikationssystem, das umfasst:
einen RNC (Radio Network Controller) (300; 900) zum Senden einer Nachricht, die erste Informationen zum Einrichten eines Transportträgers (Transport Bearer) zum Empfangen der MBMS-Daten und zweite Informationen über eine Zelle enthält, in der sich Benutzer-Endgeräte (User Equipments) Ues befinden, die zum Empfangen der MBMS-Daten eingeteilt sind; und
einen Knoten B (Node B) (320; 800; 910) zum Einrichten des Transportträgers gemäß den ersten Informationen, zum Einrichten von Funk-Trägern (Radio Bearers) gemäß den zweiten Zellen-Informationen durch Einrichten von Zellen-Sendern in jeder Zelle gemäß den zweiten Zellen-Informationen, zum Empfangen der von dem RNC über den Transportträger gesendeten MBMS-Daten und zum Senden der empfangenen MBMS-Daten zu den Benutzer-Endgeräten über die Funk-Träger.

12. Mobilkommunikationssystem nach Anspruch 11, wobei der Knoten B (800) umfasst:
eine Sende-Steuereinheit (820), die einen MBMS-Dienstkontext erzeugt, indem sie eine Nachricht empfängt, die erste Informationen zum Einrichten eines Transportträgers zum Empfangen der MBMS-Daten von einem RNC (300; 900) und Informationen über Zellen enthält, in denen sich Benutzer-Endgeräte befinden, die zum Empfangen der MBMS-Daten eingeteilt sind, und Zellen-Sender zum Senden der MBMS-Daten zu den Zellen gemäß den Zellen-Informationen einrichtet; und
eine Verteilungseinheit (850), die die MBMS-Daten verteilt und Senden der MBMS-Daten zu den Zellen über die Zellen-Sender ermöglicht.

13. Mobilkommunikationssystem nach Anspruch 15, wobei die Verteilungseinheit (850) umfasst:
eine Kopiereinrichtung (853) zum Kopieren der MBMS-Daten, gesteuert von einer Verteilungseinheit-Steuereinheit, gemäß einer Anzahl der Zellen;
einen Switch (854) zum Verbinden der von der Kopiereinrichtung gesendeten MBMS-Daten mit den Zellen-Sendern, gesteuert von der Verteilungseinheit-Steuereinheit; und
die Verteilungseinheit-Steuereinheit (851) zum Empfangen von Zellen-Informationen von der Sende-Steuereinheit und Anlegen der empfangenen Zellen-Informationen als ein Steuersignal an die Kopiereinrichtung und den Switch.

## Revendications

1. Procédé pour émettre et recevoir des données de service de radiodiffusion/multidiffusion multimédia, ou MBMS, dans un système de communication mobile comprenant un noeud B et un RNC (Radio Network Controller ou dispositif de commande de réseau de radio), comprenant les étapes consistant à :
(a) recevoir sur un noeud B (501) une première information pour établir une porteuse de transport pour recevoir les données de MBMS à partir d'un dispositif de commande de réseau de radio, RNC (300 ; 900) et une deuxième information sur une cellule où sont situés des équipements d'utilisateur, UE (330, 340, 350) prévus pour recevoir les données de MBMS ;
(b) le noeud B établissant de plus (505) la porteuse de transport en fonction de la première information et établissant des porteuses de radio en fonction de la deuxième information de cellule en établissant des émetteurs de cellule dans chaque cellule en fonction de la deuxième information de cellule ; et
(c) lors de la réception des données de MBMS à partir du RNC sur la porteuse de transport, le noeud B émettant de plus (506) les données de MBMS reçues sur les porteuses de radio, de façon à permettre ainsi aux UE de recevoir les données de MBMS.

2. Procédé selon la revendication 1, dans lequel l'étape (c) comprend les étapes consistant à :
créer un contexte de communication de noeud B, NBCC ;
mémoriser une information de couche 1 de MBMS et une information de couche 2 de MBMS ; et
établir un émetteur en fonction de l'information de couche 1 de MBMS et de l'information de couche 2 de MBMS.

3. Procédé selon la revendication 1, le procédé servant à recevoir un service de radiodiffusion/multidiffusion multimédia, MBMS, à partir du RNC par le noeud B dans le système de communication mobile comprenant une pluralité d'équipements d'utilisateur, UE (330, 340, 350) et le RNC pour commander le noeud B comprenant une pluralité de cellules (920 ; 930 ; 940) pour délivrer le service MBMS aux UE, le procédé comprenant les étapes consistant à :
recevoir (501) un message de demande d'établissement de porteuse de transport comprenant ladite première information et une information sur une cellule venant du RNC afin de supporter le service MBMS ;
générer (502) un contexte de service pour supporter le service MBMS en fonction de la première information et de la deuxième information, et attribuer un identifiant pour distinguer le contexte de service d'un contexte de service pour supporter un service MBMS ;
établir un émetteur de chaque cellule où sont situés des UE recevant le service MBMS, en fonction de la première information et de la deuxième information ; et
émettre un message de réponse d'établissement de porteuse de transport comprenant un identifiant d'adresse de transport pour établir une porteuse de transport, un identifiant de liaison, et un identifiant de contexte de service.

4. Procédé selon la revendication 1, le procédé servant à assurer un service de radiodiffusion/multidiffusion multimédia, MBMS, entre le dispositif de commande de réseau de radio, RNC (300 ; 900) et un noeud B (320, 800, 910) dans le système de communication mobile comprenant la pluralité d'équipements d'utilisateur, UE (330, 340, 350), le noeud B comprenant une pluralité de cellules pour délivrer le service MBMS aux UE, et le RNC commandant le noeud B et les noeuds B voisins, qui sont adjacents au noeud B, le procédé comprenant de plus les étapes consistant à :
émettre (302 ; 406) à l'aide du RNC un message de demande comprenant une première information pour établir une porteuse de transport pour recevoir des services MBMS et une deuxième information sur une cellule où sont disposés des UE prévus pour recevoir les services MBMS vers le noeud B, afin de supporter les services MBMS ;
générer un contexte de service pour assurer les services MBMS en fonction de la première information et de la deuxième information du message de demande, et attribuer une information d'identification du contexte de service ;
dans lequel les étapes (b) et (c) comprennent :
l'établissement (306 ; 505) d'une porteuse de transport en fonction de la première information dans le contexte de service, et, ensuite, si des données de service MBMS sont reçues à partir du RNC sur la porteuse de transport, émettre (506) les données de MBMS reçues vers des cellules respectives de telle sorte que les UE reçoivent les données de MBMS.

5. Procédé selon la revendication 4, dans lequel la première information est déterminée par une information sur le service MBMS.

6. Procédé selon la revendication 4, dans lequel la deuxième information est déterminée par une information sur une pluralité de cellules (920, 930, 940) appartenant au noeud B (320 ; 800 ; 910).

7. Procédé selon la revendication 4, dans lequel la première information est déterminée par une information sur le noeud B (320 ; 800 ; 910).

8. Procédé selon la revendication 4, comprenant de plus :
la détection de cellules où sont situés des équipements d'utilisateur, UE, prévus pour recevoir les données de MBMS, lors de la détection d'un démarrage d'un service MBMS particulier ;
la détermination d'une première information pour établir une porteuse de transport vers un noeud B auquel appartiennent les cellules, et l'émission de la première information déterminée vers le noeud B ; et
lors de la réception de la première information, l'établissement de la porteuse de transport vers le RNC en fonction de la première information, puis, si les données de MBMS sont reçues à partir du RNC sur la porteuse de transport, l'émission des données de MBMS reçues vers les cellules, de façon à permettre aux UE de recevoir les données de MBMS.

9. Procédé selon la revendication 4, comprenant de plus :
la détection de cellules où sont situés des équipements d'utilisateur, UE, prévus pour recevoir les données de MBMS, lors de la détection d'un démarrage d'un service MBMS particulier ;
la détermination d'une première information pour établir une porteuse de transport avec un noeud B auquel appartiennent les cellules, et l'établissement de la porteuse de transport avec le noeud B en fonction de la première information ; et
l'émission des données de MBMS vers le noeud B sur la porteuse de transport, de façon à permettre ainsi aux UE de recevoir les données de MBMS.

10. Procédé selon la revendication 9, dans lequel l'étape d'établissement de la porteuse de transport comprend l'établissement d'une porteuse de transport entre le RNC et le noeud B et l'établissement des données de MBMS sur cette porteuse de transport.

11. Système de communication mobile pour émettre et recevoir des données de service de radiodiffusion/multidiffusion multimédia, MBMS, dans le système de communication mobile, comprenant :
un dispositif de commande de réseau de radio, RNC (300 ; 900) pour émettre un message comprenant une première information pour établir une porteuse de transport pour recevoir les données de MBMS et une deuxième information sur une cellule où sont situés des équipements d'utilisateur UE prévus pour recevoir les données de MBMS ; et
un noeud B (320 ; 800 ; 910) pour établir la porteuse de transport en fonction de la première information, établir des porteuses de radio en fonction de la deuxième information de cellule en établissant des émetteurs de cellule dans chaque cellule en fonction de ladite deuxième information de cellule, recevoir les données de MBMS émises à partir du RNC sur la porteuse de transport, et émettre les données de MBMS reçues vers les UE sur les porteuses de radio.

12. Système de communication mobile selon la revendication 11, grâce auquel le noeud B (800) comprend :
un dispositif de commande d'émission (820) pour générer un contexte de service MBMS par réception d'un message comprenant une première information pour établir une porteuse de transport pour recevoir les données de MBMS à partir d'un dispositif de commande de réseau de radio, RNC (300 ; 900) et une information sur des cellules où sont situés des équipements d'utilisateur, UE, prévus pour recevoir les données de MBMS, et établir des émetteurs de cellule pour émettre les données de MBMS vers les cellules en fonction de l'information de cellule ; et
une unité de distribution (850) pour distribuer les données de MBMS, permettant l'émission des données de MBMS vers les cellules par l'intermédiaire des émetteurs de cellule.

13. Système de communication mobile selon la revendication 15, dans lequel l'unité de distribution (850) comprend :
un copieur (853) pour copier les données de MBMS en fonction d'un nombre des cellules sous la commande d'un dispositif de commande d'unité de distribution ;
un commutateur (854) pour connecter les données de MBMS émises à partir du copieur aux émetteurs de cellule sous la commande du dispositif de commande d'unité de distribution ; et
le dispositif de commande d'unité de distribution (851) pour recevoir une information de cellule à partir du dispositif de commande d'émission et appliquer l'information de cellule reçue au copieur et au commutateur comme signal de commande.
